Europäisches Patentamt

**European Patent Office**

**Office européen des brevets**

(19)

(11) Veröffentlichungsnummer: **0 052 336**
**B1**

(12)

# EUROPÄISCHE PATENTSCHRIFT

(45) Veröffentlichungstag der Patentschrift:
**23.11.83**

(21) Anmeldenummer: **81109615.5**

(22) Anmeldetag: **11.11.81**

(51) Int. Cl.³: **B 01 D 53/18,** B 01 D 3/28,
F 28 F 25/08

(54) **Verfahrenstechnische Packung.**

(30) Priorität: **18.11.80 DE 3043420**
**24.12.80 DE 3048968**

(43) Veröffentlichungstag der Anmeldung:
**26.05.82 Patentblatt 82/21**

(45) Bekanntmachung des Hinweises auf die Patenterteilung:
**23.11.83 Patentblatt 83/47**

(84) Benannte Vertragsstaaten:
**BE CH DE FR GB IT LI**

(56) Entgegenhaltungen:
**EP - A - 0 011 176**
**DE - C - 380 996**
**DE - U - 7 804 886**
**FR - A - 1 015 284**
**FR - E - 61 141**
**US - A - 3 952 077**
**US - A - 4 224 257**

(73) Patentinhaber: **BAYER AG, Zentralbereich Patente,**
**Marken und Lizenzen, D-5090 Leverkusen 1, Bayerwerk**
**(DE)**

(72) Erfinder: **Nickel, Andreas, Sporbecker Weg 48,**
**D-5800 Hagen (DE)**
Erfinder: **Reissinger, Karl Hermann, Dipl.-Ing.,**
**Ottweilerstrasse 21, D-5090 Leverkusen 1 (DE)**
Erfinder: **Brandt, Hans-Walther, Dr., Zum**
**Hahnenberg 64, D-5068 Odenthal (DE)**
Erfinder: **Melin, Thomas, Dr., Cutter Laboratories Inc.**
**Fourth & Parker Streets, Berkeley California (US)**

Europa-Patent Text Verfahrenstechnische Packung

Die Erfindung betrifft eine Packung zum Einbau in durchströmte Kolonnen bzw. Rohre zum Zweck des Stoffaustausches. Technische Anwendungsgebiete sind in erster Linie die Rektifikation, Absorption, Mischung, Wärmeübertragung bzw. Partikel- und Tropfenabscheidung. Im vorliegenden Fall handelt es sich um eine Packung, die aus einer Vielzahl, in einer rotationssymmetrischen Anordnung parallel zueinander geschichteten verdrillten Streifen besteht. Derartige Apparateeinbauten sind aus der FR-A2 301 281 und EP-A-0 011 176 bekannt. Sie haben sich zwar in der Praxis recht gut bewährt, besitzen aber bei Fertigung aus Gewebe den Nachteil einer verhältnismässig geringen mechanischen Stabilität. Dies hat zur Folge, dass die Packung beim Ein- oder Ausbau verhältnismässig leicht deformiert und damit beschädigt wird. Solche Schäden sind aber häufig von aussen nicht zu erkennen, so dass sie sich erst im Betrieb im Sinne eines stark reduzierten Wirkungsgrades bemerkbar machen. Bei den bekannten Packungen sind die Einzelelemente, d.h. die verdrillten Streifen (Wendeln), entweder mit Hilfe von Stegen, Bändern oder Drähten mechanisch miteinander verbunden oder direkt an den Berührungsstellen der Streifen untereinander verschweisst oder verlötet. Solche Verbindungen erfordern eine komplizierte und damit aufwendige Fertigungstechnik.

Der Erfindung liegt die Aufgabe zugrunde, eine Packung zu schaffen, die eine hohe mechanische Stabilität besitzt, leicht herzustellen ist, und verfahrenstechnisch einen hohen Wirkungsgrad hat.

Bei der Lösung dieser Aufgabe wird von einer Packung ausgegangen, die aus einer Vielzahl parallel zueinander geschichteten verdrillten Streifen, die parallel zu und rotationssymmetrisch um eine Achse M angeordnet sind, besteht. Erfindungsgemäss sind die Streifen plissiert, gleichsinnig zu Wendeln verdrillt und die Wendeln derart gegeneinander versetzt angeordnet, dass in vier achsensymmetrischen Richtungen (Z1–Z4) deren Projektionen auf die Horizontalebene untereinander einen Winkel von 90° einschliessen und deren Winkel $\alpha$ zur Achse M durch $\tan \alpha = \frac{b}{h} \cdot \sqrt{2}$ definiert ist, eine Schar von durchgehenden geradlinigen Kanälen gebildet werden, wobei h die Ganghöhe und b die Breite der Wendeln bedeuten.

Vorzugsweise haben die Wendeln alle gleiche Ganghöhe h und gleiche Breite b. Beim Zusammenlegen der Wendeln begegnen sich dann jeweils innerhalb einer Ganghöhe vier Punkte S, an denen sich die Kanten von vier benachbarten Wendeln untereinander in einem Punkt berühren.

Das Ausgangsmaterial für die Wendeln besteht vorzugsweise aus perforierten Streifen oder Gewebematerialstreifen.

Hinsichtlich der Plissierung werden optimale Ergebnisse erzielt wenn die Plissierhöhe einem Zahnprofil des Moduls 0,5 bis 2 entspricht.

Von besonderem Interesse ist die Packungsgeometrie, welche sich durch die erfindungsgemässe Anordnung von Wendeln ergibt. Dabei entsteht eine Vielzahl geordneter Kanäle in achsensymmetrischen Richtungen. Derartige Kanäle treten bei den bisher bekannten Wendelpackungen nicht auf. Diese Kanäle bewirken beim Stoffaustausch zwischen Flüssigkeiten und Gasen oder Flüssigkeiten und Dämpfen eine hohe Quervermischung der Gas- oder Dampfphase, sowie bei Extraktion oder Mischung eine hohe Quervermischung der dispersen Phase. Auf diese Weise wird ein hoher Wirkungsgrad erzielt. Die Kanäle sind also für die vorteilhafte Wirkung der Erfindung wesentlich. Überraschend ist ferner, dass ohne irgendwelche mechanischen Verbindungen zwischen den Wendeln (z.B. durch Löten, Schweisen oder Verweben) eine aussergewöhnlich hohe mechanische Stabilität erreicht wird.

Im folgenden wird die Erfindung anhand von Ausführungsbeispielen erläutert. Es zeigen schematisch:

Fig. 1 einen Aufriss der Packung;
Fig. 2 einen Schnitt AA gemäss Fig. 1 durch die Packung;
Fig. 3 eine alternative Packungsgeometrie im Grundriss;
Fig. 4 die Hauptrichtungen Z 1–4 der schrägliegenden Kanäle in der Packung;
Fig. 5 eine Vorrichtung zur Herstellung eines plissierten Streifens und
Fig. 6 den zu einer Wendel verdrillten plissierten Streifen.

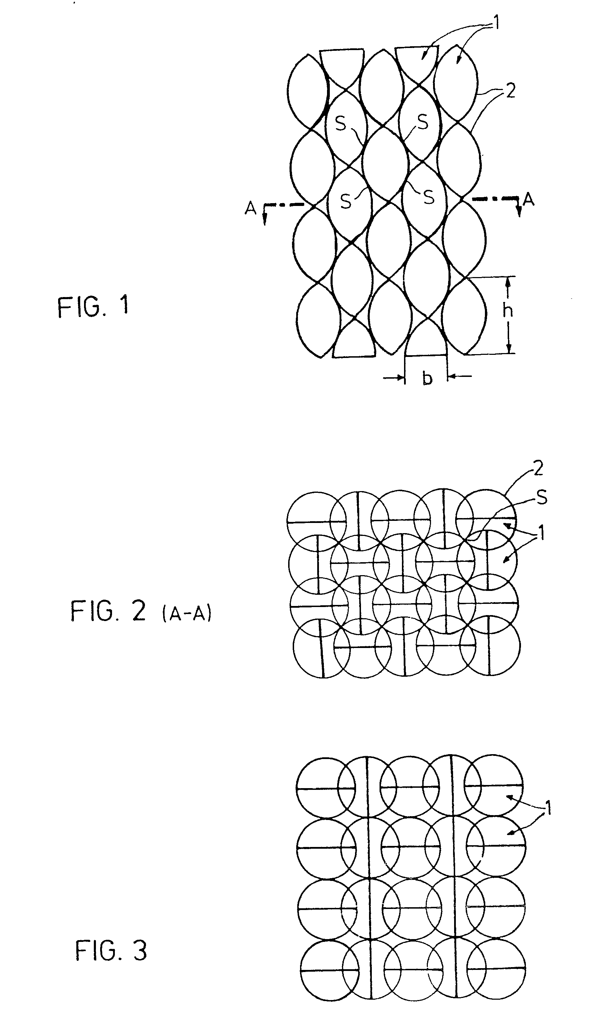

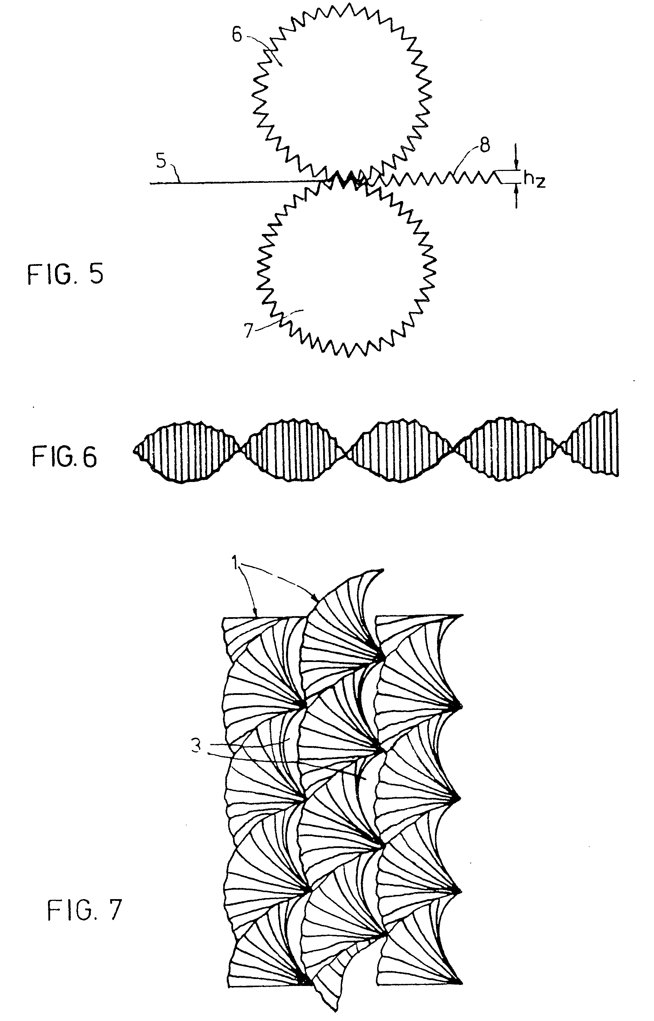

Gemäss Fig. 1 und 2 sind die zu Wendeln 1 verdrillten Streifen in einer rotationssymmetrischen Anordnung aneinandergeschichtet. Dabei hat jede Wendel 1 innerhalb einer Ganghöhe h vier Berührungspunkte S mit benachbarten Wendeln. In jedem dieser Berührungspunkte S schneiden sich vier Wendelkanten 2 (s. Fig. 2). Bei dieser Anordnung treten keine Berührungspunkte zwischen Streifenkanten 2 und Wendelachsen auf (s. Fig. 2). Als Ausgangsmaterial für die zu Wendeln 1 verdrillten Streifen werden gemäss Fig. 6 plissierte Streifen aus Blech, Gewebematerial oder Thermoplasten benutzt. Aus Gründen der Darstellung ist in Fig. 1 die Plissierung fortgelassen. Es hat sich überraschenderweise herausgestellt, dass sich die plissierten Wendeln 1 in ihren Berührungspunkten S verklemmen, was zu einer besonders stabilen Packung führt und die Berührungspunkte S fixiert. Aufgrund der hohen Dichte der Packungsgeometrie und durch die Art und die grosse Zahl der Berührungspunkte S ergibt sich für den Stoffaustausch zwischen Flüssigkeiten und Dämpfen ein Wirkungsgrad, den die bisher bekannten Packungen nach dem eingangs beschriebenen Stand der Technik nicht erreichen.

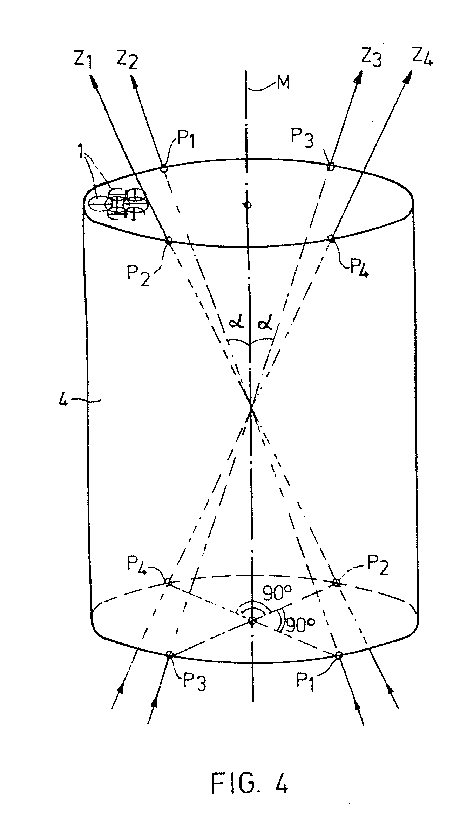

Charakteristisch für die neue Packung sind ferner eine Vielzahl von schrägliegenden Kanälen 3 (s. Fig. 7), deren geometrische Lage in Fig. 4 dargestellt ist. Die Kanäle 3, die etwa einen halbmondförmigen Querschnitt aufweisen, verlaufen parallel zu den vier achsensymmetrischen Richtungen Z1-Z4. Entsprechend den Richtungen Z1-4 werden also vier Scharen von Kanälen gebildet, wobei alle Kanäle innerhalb einer Schar parallel zueinander sind. In Fig. 4 sind in der linken oberen Ecke die parallel zur Achse M der Packung geschichteten Wendeln 1 angedeutet. Der einhüllende Zylinder für die Packung ist mit 4 bezeichnet.

Die Durchstosspunkte der für die Kanäle massgebenden Richtungen Z1-4 an der oberen und unteren Kreisfläche der zylindrischen Packung sind mit P 1, P 2, P 3, P 4 bezeichnet. Die Projektionen der Richtungen Z 1-Z 4 auf die Horizontalebene schliessen untereinander einen Winkel von 90° ein. Für den Winkel $\alpha$, den die Richtungen Z 1-4 mit der Packungsachse M bilden, gilt die Beziehung $\tan \alpha = \frac{b}{h} \cdot \sqrt{2}$, wobei h die Ganghöhe und b die Breite der Wendel 1 bedeuten (s. Fig. 1). Projiziert man alle Kanäle 3 auf eine Horizontalebene (d.h. senkrecht zur Achse M), so ergibt sich also ein rechtwinkliges Gitter. Durch diese Relation und die oben angegebene Winkelbedingung ist die Packungsgeometrie eindeutig charakterisiert. Die Stärke der Verdrillung wird durch das Verhältnis $\frac{h}{b}$ charakterisiert. Vorzugsweise soll h/b in der Praxis zwischen 1 und 5 liegen ($1 \leq$ h/b $\leq 5$). Dies bedeutet, dass die Richtungen der durchgehenden Kanäle zwischen $\alpha = 55°$ und $\alpha = 15°$ liegen ($15° \leq \alpha \leq 55°$). Die oben angegebene Winkelbeziehung gilt natürlich nur für den Idealfall. Bei einer Verzerrung der regulären Anordnung, z.B. durch Deformation, können geringfügige Abweichungen auftreten.

Eine alternative Ausführungsform der Erfindung ist in Fig. 3 dargestellt. Obwohl die Packungsgeometrie gegenüber der nach Fig. 1 und 2 erheblich abweicht, treten ebenfalls die schrägliegenden Kanäle 3 auf. Die Packung besteht hier aus parallel und deckungsgleich zueinander angeordneten Lagen mit achsensymmetrischen Wendeln, die um $h/_2$ zueinander versetzt sind. Es entstehen pro Ganghöhe h sechs Berührungspunkte, in denen sich jeweils zwei benachbarte Wendeln mit ihren Kanten berühren. Insgesamt sind also weniger Berührungspunkte vorhanden als bei der Packung gemäss Fig. 1 und 2. Damit ist auch der verfahrenstechnische Wirkungsgrad etwas geringer.

Anhand der Fig. 5 und 6 wird die Plissierung und Verdrillung erläutert. Gemäss Fig. 5 bewegt sich ein Blechstreifen 5 zwischen zwei im Eingriff befindlichen Zahnrädern 6 und 7 hindurch. Dadurch wird der Streifen 5 senkrecht zur Transportrichtung und damit auch senkrecht zur Streifenachse plissiert. Die Plissierhöhe $H_z$, d.h. die Amplitude der Wellung, entspricht dem Zahnprofil der Zahnräder 6 und 7. Die besten Ergebnisse wurden mit einer Plissierhöhe $H_z$ erzielt, die einem Zahnprofil des Moduls 0,5 bis 2 entspricht.

Hieraus resultiert eine Plissierung des ungewendelten Streifens, die im Profil etwa einem gleichseitigen Dreieck der Kantenlänge 1 bis 3 mm entspricht. Durch Verdrillung des plissierten Streifens 8 wird die Wendel 1 erzeugt. Dabei flacht die Plissierung zu den Randzonen etwas ab (s. Fig. 6).

Durch die Plissierung und die Lage der Wendeln 1 zueinander (s. Fig. 1 und 2) erreicht man schon mit einer Packung aus Blechwendeln einen Benetzungsgrad wie ihn andere bekannte Packungen erst durch eine aufwendige und teure Gewebestruktur erreichen (Tressen- oder Köperbindung). Bei Einsatz eines Leinengewebes ergab sich für die erfindungsgemässe Packung mit einer Plissierung entsprechend dem Zahnmodul 1, einer Streifenbreite von 14 mm und einer Wendelhöhe von 25 mm eine Trennleistung, die weit über den eingangs erwähnten Packungen nach dem Stand der Technik liegt.

**Patentansprüche**

1. Verfahrenstechnische Packung, bestehend aus einer Vielzahl von parallel zueinander geschichteten, verdrillten Streifen, wobei die Streifen parallel zu und rotationssymmetrisch um eine Achse M angeordnet sind, dadurch gekennzeichnet, dass die Streifen plissiert und gleichsinnig zu Wendeln (1) verdrillt sind und die Wendeln (1) derart versetzt gegeneinander angeordnet sind, dass in vier achsensymmetrischen Richtungen Z 1-Z 4, deren Projektionen auf die Horizontalebene untereinander einen Winkel von 90° einschliessen und deren Winkel $\alpha$ zur Achse M durch $\tan \alpha = \frac{b}{h} \cdot \sqrt{2}$ definiert ist, Scharen von durchgehenden geradlinigen Kanälen (3) gebildet werden, wobei h die Ganghöhe und b die Breite der Wendeln (1) bedeuten.

2. Packung nach Anspruch 1, dadurch gekennzeichnet, dass die Wendeln (1) gleiche Ganghöhe h und gleiche Breite b aufweisen und jeweils innerhalb einer Ganghöhe h vier Punkte S vorhanden sind, an denen sich die Kanten (2) von vier benachbarten Wendeln (1) untereinander in einem Punkt berühren.

3. Packung nach Ansprüchen 1-2, dadurch gekennzeichnet, dass die Wendeln (1) perforiert sind.

4. Packung nach Anspruch 3, dadurch gekennzeichnet, dass die Wendeln (1) aus einem Gewebematerial bestehen.

5. Packung nach Ansprüchen 1-4, dadurch gekennzeichnet, dass die Plissierhöhe $H_z$ einem Zahnprofil des Moduls 0,5-2 entspricht.

**Claims**

1. Packing for technical processes, consisting of a plurality of twisted strips stacked parallel to each other and arranged parallel to and in axial symmetry about an axis M, characterised in that the strips are pleated and twisted into spirals (1) of the same rotational sense and the spirals (1) are staggered in relation to each other so that groups of continuous channels (3) each extending in a straight line are formed in four axially symmetric directions Z 1–Z 4 whose projections on to a horizontal plane form an angle of 90° with each other and whose angle $\alpha$ with respect to the axis M is defined by tan $\alpha = \frac{b}{h} \cdot \sqrt{2}$, where h is the pitch and b the width of the spirals (1).

2. Packing according to Claim 1, characterised in that the spirals (1) have the same pitch h and same width b and within each pitch h there are four points S at each one of which the edges (2) of four adjacent spirals (1) meet.

3. Packing according to Claims 1–2, characterised in that the spirals (1) are perforated.

4. Packing according to Claim 3, characterised in that the spirals (1) are made of a woven material.

5. Packing according to Claims 1–4, characterised in that the height $H_z$ of the pleats corresponds to a tooth profile of modulus 0.5–2.

**Revendications**

1. Empilement technique pour procédés, consistant en une multiplicité de bandes torsadées en couches mutuellement parallèles, les bandes étant ordonnées parallèlement à un axe M avec symétrie de révolution autour de celui-ci, caractérisé en ce que les bandes sont plissées et torsadées dans le même sens en spirales (1) et en ce que les spirales (1) sont agencées mutuellement avec décalage de telle sorte que, dans quatre directions symétriques axiales Z 1–Z 4, dont les projections sur le plan horizontal font entre elles un angle de 90° et dont l'angle $\alpha$ par rapport à l'axe M est défini par tg$\alpha = \frac{b}{h} \cdot \sqrt{2}$, soient formés des ensembles de canaux (3) rectilignes traverseurs, h significant la hauteur du pas et b la largeur des spirales (1).

2. Empilement selon la revendication 1, caractérisé en ce que les spirales (1) présentent une même hauteur de pas h et une même largeur b et en ce que chaque fois à l'intérieur d'une hauteur de pas h sont présents quatre points S auxquels les arêtes (2) des quatre spirales voisines (1) se touchent mutuellement en un point.

3. Empilement selon les revendications 1 et 2, caractérisé en ce que les spirales (1) sont perforées.

4. Empilement selon la revendication 3, caractérisé en ce que les spirales (1) consistent en un matériau tissé.

5. Empilement selon les revendications 1 à 4, caractérisé en ce que la hauteur du plissage $H_z$ correspond à un profil denté de module 0,5 à 2.

FIG. 1

FIG. 2 (A-A)

FIG. 3

FIG. 4

0 052 336

FIG. 5

FIG. 6

FIG. 7

9